# EUROPÄISCHE PATENTSCHRIFT

(11) **EP 2 742 551 B1**
(45) Veröffentlichungstag und Bekanntmachung des Hinweises auf die Patenterteilung: **26.04.2017**
(21) Anmeldenummer: 12756130.6
(22) Anmeldetag: 10.08.2012
(51) Int. Cl.: H01M 2/16, H01M 2/02, H01M 10/0525, H01M 10/0563, H01M 2/14, H01M 2/18, H01M 4/58, H01M 4/485, H01M 4/80, H01M 2/08, H01M 4/136

(54) **WIEDERAUFLADBARE ELEKTROCHEMISCHE ZELLE UND VERFAHREN ZU IHRER HERSTELLUNG**
RECHARGEABLE ELECTROCHEMICAL CELL AND METHOD FOR PRODUCING SAME
CELLULE ÉLECTROCHIMIQUE RECHARGEABLE ET SON PROCÉDÉ DE FABRICATION

(30) Priorität: 12.08.2011 US 201113209357
(43) Veröffentlichungstag der Anmeldung: 18.06.2014
(73) Patentinhaber: Alevo International S.A., 1920 Martigny (CH)
(72) Erfinder: BORCK, Markus, 70567 Stuttgart (DE); ZINCK, Laurent, F-76470 Mothern (FR)
(74) Vertreter: Durm & Partner
(86) Internationale Anmeldenummer: PCT/EP2012/065727
(87) Internationale Veröffentlichungsnummer: WO 2013/024045

(56) Entgegenhaltungen:
- EP-A1- 0 240 915
- EP-A1- 1 923 934
- EP-A1- 2 355 203
- EP-A2- 0 472 232
- US-A- 5 470 676
- US-A1- 2003 165 736
- US-A1- 2010 283 429
- US-B1- 6 511 773

## Beschreibung

Die Erfindung betrifft eine wiederaufladbare Lithium-Batteriezelle mit einer positiven Elektrode, einer negativen Elektrode und einem Elektrolyten, der ein Leitsalz enthält.

Wiederaufladbare Batteriezellen sind auf vielen technischen Gebieten von großer Bedeutung. Vielfach werden sie für Anwendungen eingesetzt, bei denen nur relativ geringe Stromstärken benötigt werden, wie beispielsweise Mobiltelefone. Daneben gibt es einen großen Bedarf von Batteriezellen für Hochstromanwendungen (Hochstromzellen), wobei der elektrische Antrieb von Fahrzeugen von besonderer Bedeutung ist. Die vorliegende Erfindung richtet sich insbesondere auf Zellen, die auch für Hochstromanwendungen geeignet sind.

Eine wichtige Anforderung ist eine hohe Energiedichte. Die Zelle soll möglichst viel elektrische Energie je Gewichts- und Volumeneinheit enthalten. In dieser Hinsicht ist Lithium als aktives Metall besonders vorteilhaft.

Wiederaufladbare Lithium-Zellen sind in der Praxis nahezu ausschließlich Lithium-Ionen-Zellen. Ihre negative Elektrode besteht aus auf Kupfer beschichtetem Kohlenstoff, in den beim Laden Lithium-Ionen eingelagert werden. Auch die positive Elektrode besteht aus einem Insertionsmaterial, das zur Aufnahme von Ionen des aktiven Metalls geeignet ist. In der Regel basiert die positive Elektrode auf Lithiumkobaltoxid, das auf ein Ableitelement aus Aluminium beschichtet ist. Beide Elektroden sind sehr dünn (Dicke in der Regel kleiner als 100 µm). Beim Laden werden die Ionen des aktiven Metalls aus der positiven Elektrode ausgelagert und in die negative Elektrode eingelagert. Beim Entladen läuft der umgekehrte Prozess ab. Der Transport der Ionen zwischen den Elektroden erfolgt mittels des Elektrolyts, der die erforderliche Ionenbeweglichkeit aufweist. Lithium-Ionen-Zellen enthalten einen Elektrolyt, der aus einem in einem organischen Lösungsmittel oder Lösungsmittelgemisch (z.B. auf Basis von Ethylencarbonat) gelösten Lithiumsalz (z.B. LiPF₆) besteht. Sie werden nachfolgend auch als "organische Lithium-Ionen-Zellen" bezeichnet.

Problematisch sind organische Lithium-Ionen-Zellen hinsichtlich der Sicherheit. Sicherheitsrisiken werden insbesondere durch den organischen Elektrolyt verursacht. Wenn eine Lithium-Ionen-Zelle Feuer fängt oder sogar explodiert, stellt das organische Lösungsmittel des Elektrolyts das brennbare Material dar. Um solche Risiken zu vermeiden, müssen zusätzliche Maßnahmen getroffen werden, insbesondere hinsichtlich einer sehr exakten Regelung der Lade- und Entladevorgänge und hinsichtlich zusätzlicher Sicherheitsmaßnahmen in der Batteriekonstruktion. Beispielsweise enthält die Zelle Komponenten, die im Fehlerfall schmelzen und damit den Stromfluss in der Zelle unterbinden. Diese Maßnahmen führen jedoch zu erhöhten Kosten und erhöhen Volumen und Gewicht, vermindern also die Energiedichte.

Die Probleme sind besonders schwerwiegend, wenn Batteriezellen für Hochstromanwendungen entwickelt werden sollen. Die Anforderungen an die Stabilität und langfristige Betriebssicherheit sind dabei besonders hoch. Als Hochstromzellen werden hier Zellen bezeichnet, die (bei Nennspannung) eine Strombelastbarkeit, bezogen auf die Elektrodenfläche (nachfolgend "flächenspezifische Strombelastbarkeit"), von mindestens 5 mA/cm², vorzugsweise mindestens 10 mA/cm², weiter bevorzugt mindestens 50 mA/cm² und besonders bevorzugt mindestens 100 mA/cm² haben.

Es besteht ein hohes Bedürfnis nach verbesserten wiederaufladbaren Batteriezellen, die insbesondere folgende Anforderungen erfüllen:
- Sehr gute elektrische Leistungsdaten, insbesondere hohe Energiedichte bei gleichzeitig hohen entnehmbaren Strömen (Leistungsdichte).
- Sicherheit, auch unter den erschwerten Betriebsbedingungen in einem Fahrzeug.
- Hohe Lebensdauer, insbesondere hohe Zahl nutzbarer Lade- und Entladezyklen.
- Möglichst niedriger Preis, d.h. kostengünstige Materialien und möglichst einfache Produktionsverfahren.
- Weitere für die Praxis wichtige Anforderungen wie Überladefähigkeit und Tiefentladefähigkeit.

In diesem Zusammenhang beschreibt beispielsweise die US 6,511,773 eine Batteriezelle mit einem Elektrolyten, der SO₂ in geringer Konzentration enthält, und mit mehreren positiven und negativen Elektroden und einem aus Glasfaser bestehenden Separator. Hier wird vorgeschlagen, alle Elektroden mit dem Separator zu umwickeln. Die US 5,470,676 betrifft eine Bleibatterie, die Glasfaserumhüllungen bei Elektroden gleicher Polarität aufweist und bei der die anderen Elektroden an der Außenseite der Umhüllung angeordnet sind. Die EP 0 240 915 A1 beschreibt ein Verfahren zur Herstellung von Akkumulatoren mit Elektrodenplatten, die von einem Glasvlies umhüllt sind. Danach sollen wenigsten die Elektroden einer Polarität mit einer Taschenumhüllung ausgebildet sein.

In der WO 2011/098233 A2 ist eine Batteriezelle beschrieben, die die obengenannten teilweise widersprüchlichen Anforderungen wesentlich besser als bisher erfüllt. Sie zeichnet sich durch folgende Besonderheiten aus, die auch bei der Batteriezelle der vorliegenden Erfindung vorzugsweise realisiert sind:
a) Der Elektrolyt enthält SO₂. Bevorzugt handelt es sich um einen auf SO₂ basierenden Elektrolyt (SO₂ based electrolyte). Mit diesem Begriff wird im Rahmen der Erfindung ein Elektrolyt bezeichnet, der SO₂ nicht nur als Zusatz in geringer Konzentration enthält, sondern bei dem die Konzentration des SO₂ so hoch ist, dass die Beweglichkeit der Ionen des Leitsalzes, das in dem Elektrolyt enthalten ist und den Ladungstransport bewirkt, zumindest teilweise durch das SO₂ gewährleistet ist. Vorzugsweise ist der Elektrolyt im wesentlichen frei von organischen Materialien, wobei "im wesentlichen" dahingehend zu verstehen ist, dass die Menge eventuell vorhandener organischer Materialien so gering ist, dass sie kein Sicherheitsrisiko darstellen.
b) Die positive Elektrode enthält ein aktives Material der Zusammensetzung LiₓM'_{y}M"_{z}(XO₄)ₐF_{b}, wobei
   M' mindestens ein Metall, ausgewählt aus der Gruppe bestehend aus den Elementen Ti, V, Cr, Mn, Fe, Co, Ni, Cu und Zn ist,
   M" mindestens ein Metall, ausgewählt aus der Gruppe bestehend aus den Metallen der Gruppen 2, 3, 4, 5, 6, 8, 9, 10, 11, 12, 13, 14, 15 und 16 des Periodensystems, ist,
   X ausgewählt aus der Gruppe bestehend aus den Elementen P, Si und S ist,
   x größer 0 ist,
   y größer 0 ist,
   z größer oder gleich 0 ist,
   a größer 0 ist und
   b größer oder gleich 0 ist.

Darin ist X bevorzugt das Element P. Besonders bevorzugt ist M' das Metall Fe und besonders bevorzugt b gleich 0. Lithiumeisenphosphate sind besonders bevorzugte aktive Materialien der positiven Elektrode.

Besonders bevorzugte aktive Materialien der positiven Elektrode sind:
LiFePO₄
LiₓFe_{y}M_{z}PO₄
LiₓFe_{y}(SO4)ₐ
Li FeSO₄F,
wobei die Suffixe x, y, z und a die oben genannte Bedeutung haben.

Das aktive Material kann eine zusätzliche Dotierung enthalten, die nicht Bestandteil seiner Gitterstruktur ist.

Auf der Grundlage dieses Standes der Technik strebt die Erfindung an, eine Batteriezelle mit weiter verbesserter Funktion und Betriebssicherheit zur Verfügung zu stellen.

Dieses technische Problem wird durch eine wiederaufladbare elektrochemische Lithiumionen-Batteriezelle mit einem Gehäuse, einer positiven Elektrode, einer negativen Elektrode und einem Elektrolyt, der SO₂ und ein Leitsalz des aktiven Metalls der Zelle enthält, gelöst, welche dadurch gekennzeichnet ist, dass die positiven Elektroden von einer Umhüllung aus einem Glasfaser-Textilmaterial umhüllt sind, die Flächenausdehnung der Umhüllung aus Glasfaser-Textilmaterial größer als die Flächenausdehnung der Elektrode ist, so dass sich das Glasfaser-Textilmaterial über die Begrenzung der Elektrode hinaus erstreckt, und zwei die Elektrode beidseitig bedeckende Schichten des Glasfaser-Textilmaterials am Rand der Elektrode durch eine Randverbindung miteinander verbunden sind. Gegenstand der Erfindung ist auch ein Verfahren zur Herstellung einer solchen Batteriezelle.

Erfindungsgemäß sind sämtliche positive Elektroden der Zelle jeweils von einer Umhüllung aus einem Glasfaser-Textilmaterial umhüllt und in einem Elektrodenstapel alternierend mit negativen Elektroden in der Zelle angeordnet. Die Flächenmaße der Elektroden und der Umhüllung sind so aufeinander abgestimmt, dass die Außenabmessungen der Umhüllung der positiven Elektroden und die Außenabmessungen der negativen Elektroden mindestens in einer Dimension übereinstimmen.

Durch die Kombination der erfindungsgemäßen Merkmale wird eine erhebliche Verbesserung der Funktion der Zellen erreicht. Insbesondere wurde im Rahmen der Erfindung festgestellt, dass die Umhüllung der Elektrode zu einer gleichmäßigeren lonenwanderung und Ionenverteilung führt. Je gleichmäßiger die Ionenverteilung, insbesondere in der negativen Elektrode, ist, desto höher ist die mögliche Beladung des aktiven Materials der Elektrode und infolgedessen die nutzbare Kapazität der Zelle. Gleichzeitig werden Risiken vermieden, die mit einer ungleichmäßigen Beladung und daraus resultierenden Abscheidung des aktiven Metalls verbunden sein können. Diese Vorteile wirken sich vor allem aus, wenn die positiven Elektroden der Zelle mit der Umhüllung aus Glasfaser-Textilmaterial (nachfolgend auch als "Glasfaser-Beutel" bezeichnet) umhüllt sind. Der Effekt ist also hinsichtlich der Elektrodenpolarität unterschiedlich, auch wenn die Elektrodenkonstruktion, abgesehen vom aktiven Material der Elektrode, völlig symmetrisch ist.

Bestandteil der Elektroden ist jeweils ein aktives Material, dessen Ladungszustand sich ändert, wenn beim Laden oder Entladen der Zelle Ionen des aktiven Metalls der Zelle, insbesondere Lithiumionen, in das aktive Material aufgenommen werden. Dabei frei werdende Elektronen treten in ein elektronisch leitendes Ableitelement über, welches ebenfalls Bestandteil der Elektrode ist.

Wie bereits erwähnt, wird die vorliegende Erfindung bevorzugt bei einer wiederaufladbaren Lithium-Batteriezelle gemäß der WO 2011/098233 A2 eingesetzt. Auf dieses Dokument wird vollinhaltlich Bezug genommen. Beispielsweise sind folgende Besonderheiten bei der vorliegenden Erfindung realisiert, die im Wesentlichen in dem genannten Dokument beschrieben sind, aus dem auch nähere Einzelheiten entnommen werden können:
- Die positive Elektrode ist ungewöhnlich dick, wobei Mindestwerte der Dicke von 0,25 mm, 0,3 mm, 0,4 mm, 0,5 mm, 0,6 mm, 0,8 mm und 1,0 mm in dieser Reihenfolge besonders bevorzugt sind. Bevorzugt beträgt die Dicke der positiven Elektrode maximal 2 mm, besonders bevorzugt maximal 1,5 mm.
- Die positive Elektrode weist ein Ableitelement mit einer dreidimensionalen porösen Metallstruktur, insbesondere in Form eines Metallschaums auf. Dabei ist es besonders bevorzugt, wenn sich die poröse Metallstruktur im Wesentlichen über die gesamte Dicke der positiven Elektrode erstreckt. Gemäß einer weiteren bevorzugten Ausführungsform ist das aktive Material der positiven Elektrode in der dreidimensionalen porösen Metallstruktur, die deren Ableitelement bildet, im Wesentlichen gleichmäßig verteilt.
- Die negative Elektrode enthält als aktives Material vorzugsweise Kohlenstoff zur Aufnahme von Lithium-Ionen. Auch sie ist bevorzugt ungewöhnlich dick, wobei Mindestwerte der Dicke von 0,2 mm, 0,3 mm, 0,4 mm, 0,5 mm, 0,6 mm und 0,8 mm in dieser Reihenfolge besonders bevorzugt sind. Bevorzugt beträgt die Dicke der negativen Elektrode höchstens 1,5 mm, besonders bevorzugt höchstens 1 mm.
- Der Elektrolyt enthält eine im Vergleich zu der Menge des Leitsalzes relativ hohe Konzentration an SO₂, wobei Mindestwerte von 1,5 Mol, 2 Mol SO₂, 2,5 Mol SO₂, 3 Mol SO₂, 4 Mol SO₂, 4,5 Mol SO₂, 5 Mol SO₂ und 6 Mol SO₂ je Mol Leitsalz in dieser Reihenfolge besonders bevorzugt sind. Bevorzugt beträgt die Konzentration maximal 20 Mol SO₂ je Mol Leitsalz.

Der erfindungsgemäßen Problemlösung standen eine Reihe schwieriger Probleme entgegen, die mit der Verwendung eines anorganischen, vorzugsweise auf SO₂, basierenden, Elektrolyten zusammenhängen und bei konventionellen Zellen mit einem organischen Elektrolyt nicht gegeben sind.
- Der Elektrolyt ist sehr aggressiv. Sowohl das Glasfaser-Textilmaterial als auch die Randverbindung müssen stabil sein gegen den SO₂-Elektrolyt und dessen Überladeprodukte. Dadurch ist die Auswahl geeigneter Materialien sehr beschränkt.
- Als Glasfaser-Textilmaterial werden Verbundstrukturen aus sehr dünnen Fäden oder Fasern, insbesondere Gewebe, Gewirke und Vliese bezeichnet. Mit der textilen Struktur sind erhebliche Probleme hinsichtlich der Verarbeitung bei der Herstellung einer elektrochemischen Zelle verbunden.
- Die textile Struktur und die glatte Oberfläche der Glasfasern führen zu einem starken Ausfransen am Rand der Glasfaserschichten. Dadurch wird die Montage erschwert und die Funktion beeinträchtigt.
- Die für elektrochemische Zellen verwendbaren Glasfasermaterialien bestehen aus sehr dünnen Fasern. Zur Optimierung der Beladungskapazität der Zelle und deren elektrochemischer Eigenschaften soll das Glasfaser-Textilmaterial möglichst dünn sein. In der praktischen Erprobung der Erfindung wurde beispielsweise ein Material mit einer Gesamtdicke von 120 µm verwendet. Dies führt dazu, dass das Material sehr flexibel (biegbar) ist. Es hat also praktisch keine natürliche Steifheit, die die Montage vereinfachen würde. Erst durch die Verbindung am Rand wird eine für die Montage und mechanische Stabilität der Zelle vorteilhafte Festigkeit erreicht.
- Wie bereits erwähnt, wird die Erfindung vorzugsweise in Verbindung mit relativ dicken positiven Elektroden eingesetzt. Um die Entladekapazität der Zelle zu maximieren, soll der Rand, um den sich der Glasfaser-Beutel über die Außenabmessungen der Elektrode hinaus erstreckt, möglichst schmal sein. Dies führt zu erheblichen Anforderungen an die Verformbarkeit des Materials im Randbereich und an die Festigkeit der Randverbindung.

Im Rahmen der Erfindung wurde festgestellt, dass trotz dieser Bedenken die Umhüllung der Elektroden, insbesondere der positiven Elektroden mit einem Glasfaser-Beutel nicht nur möglich, sondern auch besonders vorteilhaft ist, wobei die Vorteile insbesondere aus der verbesserten Gleichmäßigkeit der Ionenwanderung, wie oben dargelegt, resultieren.

Weitere Vorteile werden unter Berücksichtigung der nachfolgend erläuterten bevorzugten Ausgestaltungen erreicht.

Die Erfindung wird nachfolgend anhand eines in den Figuren dargestellten Ausführungsbeispiels näher erläutert. Die darin dargestellten und nachfolgend beschriebenen Besonderheiten können einzeln oder in Kombination verwendet werden, um bevorzugte Ausgestaltungen der Erfindung zu schaffen. Es zeigen:
- Fig. 1: eine perspektivische Explosionsdarstellung einer erfindungsgemäßen Batteriezelle;
- Fig. 2: eine perspektivische Darstellung von einer positiven und zwei negativen Elektroden eines Elektrodenstapels in der Zelle von Fig. 1;
- Fig. 3: eine perspektivische Darstellung eines Elektrodenstapels der Zelle von Fig. 1 und einer noch nicht gefalteten Stapel-Umhüllung des Elektrodenstapels;
- Fig. 4: eine perspektivische Darstellung einer positiven Elektrode mit schematischen Ausschnittsvergrößerungen zur Erläuterung von deren innerer Struktur;
- Fig. 5: einen Querschnitt durch eine positive Elektrode mit Umhüllung entlang der Linie V-V in Fig. 2.

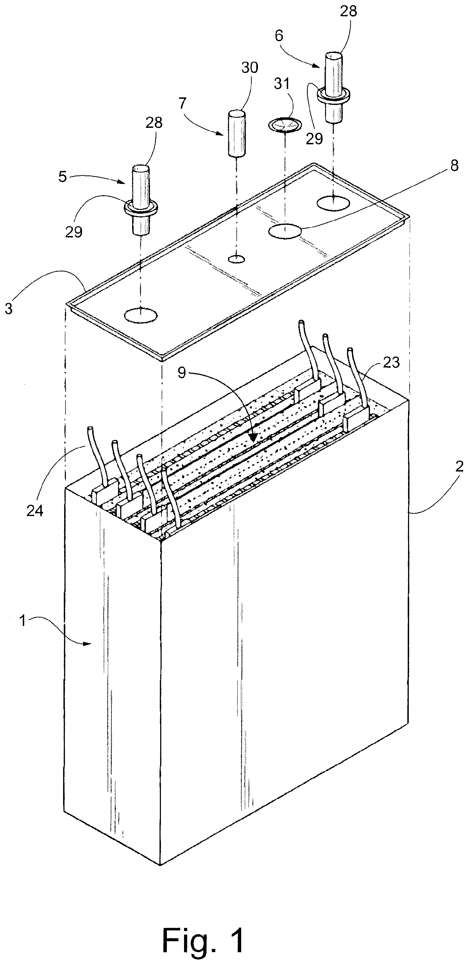

Fig. 1 zeigt eine erfindungsgemäße elektrochemische Zelle mit einem Gehäuse 1, das ein nur nach oben offenes Unterteil 2 und ein die obere Öffnung des Unterteils 2 schließendes Deckelteil 3 umfasst. Das Gehäuse ist im dargestellten bevorzugten Fall prismatisch (quaderförmig) ausgebildet. Eine andere, insbesondere zylinderförmige Gehäusegestaltung mit vorzugsweise gewickelten Elektroden ist jedoch ebenfalls möglich. Die Gehäusewand besteht bevorzugt aus einem dauerhaften Metall, beispielsweise Edelstahl, das korrosionsbeständig gegen den Elektrolyten der Zelle und gegenüber möglichen Überladeprodukten ist. Für viele Anwendungen, insbesondere in der Fahrzeugtechnik, sollte das Gehäuse eine Lebensdauer von mehr als zehn Jahren haben.

In dem dargestellten bevorzugten Fall hat das Deckelteil 3 vier Ports, nämlich zwei elektrische Durchführungen 5 und 6, einen Füllanschluss 7 und einen Sicherheitsport 8. Die elektrischen Durchführungen 5 und 6 haben jeweils einen Leiterstab 28, der in einem Isolationsring 29 sitzt, durch den die elektrische Durchführung abgedichtet und die erforderliche elektrische Isolation gegenüber dem Deckelteil 3 sichergestellt wird. Die elektrischen Durchführungen 5 und 6 sind elektrisch leitend mit den Anschlussdrähten 23 und 24 der positiven bzw. der negativen Elektroden verbunden.

Vorzugsweise sind die elektrischen Durchführungen als Glas-Metall-Durchführungen ausgeführt, wobei der Isolationsring 29 aus einem Glasmaterial besteht, das, beispielsweise durch Laserschweißen, dichtend mit dem Deckelteil 3 und mit dem Leiterstab 28 verbunden ist. Der Leiterstab 28 erstreckt sich in das Innere des Gehäuses. Er kann massiv ausgebildet sein und zum elektrischen Anschluss der Zelle dienen. Am unteren Ende im Inneren der Zelle können die Anschlussdrähte 23, 24 angeschweißt sein. Die Anschlussdrähte 23, 24 können auch in Form von Metallblechen ausgebildet sein.

Es sind auch Ausführungen möglich, bei denen mindestens einer der Leiterstäbe 28 in seinem Inneren einen Kanal aufweist, der als Durchlassöffnung zwischen dem Inneren der Zelle und dem Außenraum dient. Die Anschlussdrähte können dabei durch die Kanäle der Leiterstäbe 28 geführt werden. Die Durchführungen 5, 6 werden dann gasdicht verschlossen, z.B. verschweißt, so dass die Zelle dauerhaft gasdicht abgedichtet ist. Die Elektroden sind parallel geschaltet. Der Übersichtlichkeit halber sind die hierzu notwendigen elektrischen Verbindungen in der Figur nicht dargestellt.

Bei der dargestellten Ausführungsform hat der Füllanschluss 7 ein Anschlussrohr 30 mit einem Durchlasskanal, der die erforderliche Verbindung zwischen dem Innenraum der Zelle und dem Außenraum zum Füllen der Zelle mit dem Elektrolyten gewährleistet. Der Durchlasskanal wird nach dem Füllen mit geeigneten Mitteln verschlossen, beispielsweise verschweißt, damit die Zelle dauerhaft gasdicht ist.

Der Sicherheitsport 8 hat bevorzugt eine Oberflächenschicht, die so ausgebildet ist, dass sie aufreißt oder nachgibt, wenn der Innendruck in der Zelle einen vorgegebenen Wert überschreitet. Vorzugsweise wird die Oberflächenschicht von einer Sollbruchscheibe 31 (Berstscheibe) aus Metall gebildet. Im Betriebszustand der Zelle ist das Gehäuse vorzugsweise hermetisch geschlossen. Weiter ist es bevorzugt, dass eines oder mehrere der dargestellten Elemente (Glas-Metall-Durchführung, Elektrolyt-Füllanschluss und Berstscheibe) durch Laserschweißen mit den entsprechenden Ports des Deckelteils 3 verbunden sind. Auch für die Verbindung des Deckelteils 3 mit dem Unterteil 2 des Gehäuses 1 wird vorzugsweise ein Laserschweißverfahren verwendet.

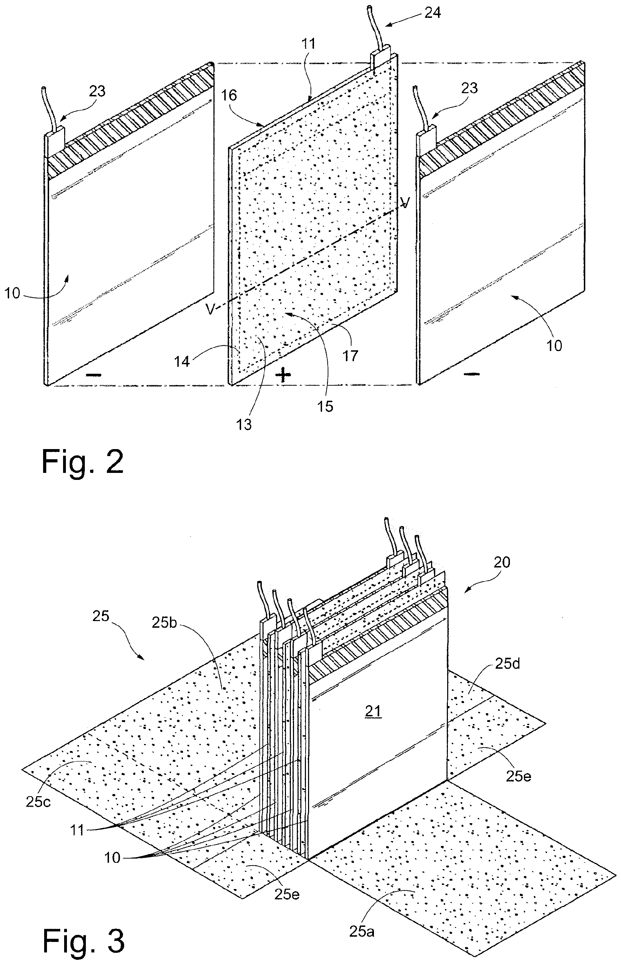

In Fig. 2 sind zwei negative Elektroden 10 und eine positive Elektrode 11 dargestellt. Jede der Elektroden hat einen Anschlussdraht 23 bzw. 24 zum Anschluss an die entsprechenden elektrischen (gasdicht geschlossenen) Durchführungen 5 bzw. 6 der Zelle. Selbstverständlich können auch Metallbleche o.ä. verwendet werden. Die Elektroden sind als flache Scheiben ausgebildet, d. h. sie haben eine im Vergleich zu ihren Flächendimensionen (Länge und Breite) sehr geringe Dicke. Die Dimensionen in Flächenrichtung (Länge und Breite der Fläche) werden insgesamt als "Flächenausdehnung" bezeichnet.

Bei der dargestellten bevorzugten Ausführungsform ist die positive Elektrode (vorzugsweise alle positiven Elektroden der Zelle) von einer Umhüllung 13 aus einem Glasfaser-Textilmaterial (Glasfaser-Beutel) umhüllt. Dabei ist die Flächenausdehnung der Umhüllung größer als die Flächenausdehnung der Elektrode, deren Begrenzung 14 in Fig. 2 als gestrichelte Linie eingezeichnet ist. Zwei die Elektrode beidseitig bedeckende Schichten 15 und 16 des Glasfaser-Textilmaterials sind am Rand der Elektrode 11 durch eine Randverbindung 17 miteinander verbunden. Die Randverbindung 17 erstreckt sich vorzugsweise längs mindestens zwei, weiter bevorzugt drei, der vier Kanten des Glasfaser-Beutels 13 bzw. der darin befindlichen Elektrode 11, nämlich deren Unterkante und deren nach oben verlaufenden Seitenkanten. Bevorzugt ist die Randverbindung an den Kanten, an denen sie vorhanden ist, ununterbrochen. Je nach Anwendungsfall kann sie jedoch auch unterbrochen sein. Bei Zellen, die (wie die Zellen von Kfz-Batterien) in einer bestimmten Orientierung im Raum benutzt werden, also nicht lageunabhängig funktionieren müssen, kann die Randverbindung an der oberen Kante entfallen. Wenngleich die einseitig offenen Glasfaserbeutel bereits ein zuverlässiges Halten der umhüllten Elektrode aufgrund des engen Packens der Elektroden in der Zelle und aufgrund eines Quellen während des Betriebs der Batterie gewährleisten, so dass ein Verrutschen oder Herausrutschen der Elektroden verhindert wird, ist auch in derartigen Anwendungsfällen und insbesondere bei Zellen, die lageunabhängig betrieben werden, eine Randverbindung an allen Kanten der Umhüllung vorteilhaft. Sie hat in diesem Fall vorzugsweise nur eine, für den Durchtritt der Anschlussdrähte ausreichende, Unterbrechung.

Für das Glasfaser-Textilmaterial sind unterschiedliche textile Faser-Verbundstrukturen geeignet. Wichtige Beispiele sind Gewebe, Vliese und Gewirke aus Glasfasern. Die textile Faserverbundstruktur kann sowohl aus monofilamenten Glasfäden als auch aus multifilamenten Glasfäden (Glasfasergarnen) bestehen. Besonders bevorzugt sind Gewebe aus multifilamenten Glasfasergarnen.

Genaue Angaben über die Parameter besonders bevorzugter Glasfaser-Textilmaterialien können nicht gemacht werden, weil die verschiedenen Parameter des Glasfaser-Textilmaterials (z. B. Fadendichte, Fadenstärke, mono- oder multifilament, Gesamtdicke des Schichtmaterials) in einem komplizierten Wechselverhältnis zueinander stehen. Auf der Grundlage der Lehre der vorliegenden Erfindung ist es jedoch ohne Weiteres möglich, die Eignung eines ins Auge gefassten Glasfaser-Textilmaterials zu erproben.

Dabei kann es zweckmäßig sein, zunächst folgende Eigenschaften eines ins Auge gefassten Glasmaterials in Vorversuchen außerhalb der Zelle zu testen:
- Benetzbarkeit mit Elektrolyt
- Beständigkeit gegenüber dem auf SO₂ basierenden Elektrolyt
- Beständigkeit gegenüber den Überladeprodukten, insbesondere gegenüber Aluminiumchlorid und Sulfurylchlorid
- Mechanische Stabilität nach Elektrolytkontakt
- Elektrischer Kurzschlusstest
- Mechanische Stabilität bei der Montage (Handhabung, Schneiden, Stapeln, Einführen in die Zelle etc.)
- Verklebbarkeit zur Herstellung der Randverbindung

Es müssen die Tests ausgewählt werden, die der späteren Verwendung des Materials Rechnung tragen. So braucht z.B. ein Material nicht gegen Überladeprodukte stabil zu sein, wenn es in einer Zelle eingesetzt wird, in deren Betrieb keine Überladeprodukte gebildet werden. Materialien, die als Stapel-Umhüllung dienen sollen, müssen nicht unbedingt mit Elektrolyt benetzbar sein.

Materialien, die sich bei diesen Vorversuchen als brauchbar erwiesen haben, können dann in eine Versuchszelle eingebaut werden. Deren Eigenschaften, insbesondere hinsichtlich elektrischer Kapazität über eine Vielzahl von Lade- und Entladezyklen sowie hinsichtlich der Sicherheit auch unter extremen Betriebsbedingungen (Schnellladen und/oder Überladen) werden untersucht.

Nach dem gegenwärtigen Kenntnisstand der Erfinder sollte die Dicke des Glasfaser-Textilmaterials höchstens 300 µm, vorzugsweise höchstens 200 µm und besonders bevorzugt höchstens 150 µm betragen. Die mit dickeren Materialien erreichbare weitere Verbesserung der elektrischen Zelleigenschaften rechtfertigt in der Regel nicht den Verlust an Energiedichte, der mit dem zusätzlichen Material verbunden ist.

Andererseits sollte die Dicke des Glasfaser-Textilmaterials auch gewisse Mindestwerte nicht unterschreiten, weil im Rahmen der Erfindung festgestellt wurde, dass dann die angestrebten Verbesserungen der elektrischen Daten der Zelle nicht im gewünschten Ausmaß erreicht werden. Bevorzugt beträgt die Dicke des Glasfaser-Textilmaterials mindestens 50 µm, wobei Werte von 60, 70, 80 und 90 µm in dieser Reihenfolge besonders bevorzugt sind.

Auch die Fadendichte ist für den praktischen Erfolg wichtig. Für den bevorzugten Fall eines Glasfasergewebes kann die Fadendichte in den beiden Raumrichtungen, welche Kette und Schuss des Gewebes entsprechen, unterschiedlich sein. Vorzugsweise sollte sie in der Raumrichtung mit der geringeren Dichte mindestens fünf Fäden/cm, bevorzugt mindestens 10 Fäden/cm, weiter bevorzugt mindestens 20 Fäden/cm betragen.

Die für die Herstellung von Glasfaser-Textilmaterialien verwendeten multifilamenten Glasfasergarne (auch als Glasfilamentgarne bezeichnet) werden häufig mit einer sogenannten "Schlichte" beschichtet, durch die der weitere Verarbeitungsprozess, also beispielsweise das Weben eines Gewebes erleichtert wird. Die Schlichte kann aus Stärke und Ölen bestehen.

Es wurde festgestellt, dass völlig freie, also unbeschichtete, Glasfaseroberflächen nicht unbedingt vorteilhaft sind. Besonders gute Ergebnisse wurden mit Glasfaser-Textilmaterialien erreicht, bei denen die Glasfasern mit einer geeigneten polymeren Beschichtung, versehen sind. Die Beschichtung enthält vorzugsweise ein fluorhaltiges Polymer wie PTFE (Polytetrafluorethylen), ETFE (Ethylen-Tetrafluorethylen), FEP (Perfluorethylenpropylen), THV (Terpolymer aus Tetrafluorethylen, Hexafluorpropylen und Vinylidenfluorid) oder PFA (Perfluoralkoxy-Polymere) oder sie enthält ein Aminosilan oder PP (Polypropylen) oder PE (Polyethylen). Durch eine derartige Beschichtung kann die mechanische Stabilität des Glasfaser-Textilmaterials verbessert werden. Darüber hinaus kann sich ein zusätzlicher Gewinn an Sicherheit der Zelle ergeben. Im Falle der fluorhaltigen Polymere lässt sich dies damit erklären, dass im Falle einer metallischen Lithiumabscheidung das Lithium mit dem Fluor der Beschichtung reagiert, wobei sich Lithiumfluorid (LiF) bildet. Durch diese Reaktion können Kurzschlüsse vermieden werden. Sollte es zu einer verstärkten Abscheidung von Lithium kommen, kann durch die Reaktion mit der fluorhaltigen Beschichtung das Glasfaser-Textilmaterial so dicht werden, dass keine weiteren Reaktionen stattfinden können und der lonentransport durch das Textilmaterial blockiert wird. Dadurch werden heftige Kurzschlussreaktionen vermieden bzw. gestoppt. In der praktischen Erprobung der Erfindung wurde darüber hinaus festgestellt, dass bei Verwendung der beschichteten Glasfaser-Textilmaterialien eine verbesserte Stabilität der elektrischen Kapazität über eine Vielzahl von Lade- und Entladezyklen erreicht wurde.

Fig. 3 zeigt einen Elektrodenstapel, der aus vier negativen Elektroden 10 und drei positiven Elektroden 11 besteht, wobei die positiven Elektroden 11 jeweils mit einem Glasfaser-Beutel 13 umhüllt sind. Die Elektroden 10, 11 sind in dem Elektrodenstapel 20 alternierend angeordnet. Generell ist es bevorzugt, wenn die Anzahl der nicht umhüllten Elektroden (vorzugsweise der negativen Elektroden) um Eins größer als die Anzahl der Elektroden mit einem Glasfaser-Beutel (vorzugsweise der positiven Elektroden) ist. Dies hat zur Folge, dass die äußeren Stirnflächen 21 des Elektrodenstapels 20 von den nicht umhüllten Elektrodenoberflächen (vorzugsweise der negativen Elektroden) gebildet werden.

Wie erwähnt, besteht das Gehäuse 1 der Zelle vorzugsweise aus einem Metall oder anderen elektrisch leitenden Material. Dabei hat es sich als vorteilhaft erwiesen, den Elektrodenstapel 20 mit einer als Stapel-Umhüllung 25 bezeichneten äußeren Umhüllung dergestalt zu umhüllen, dass kein elektrischer Kontakt zu den Wänden des Gehäuses 1 besteht. In Fig. 3 ist diese Stapel-Umhüllung 25 in einem Zustand dargestellt, bevor sie um den Elektrodenstapel 20 herumgefaltet wird. Die Teilfläche 25a der Stapel-Umhüllung 25 wird über die negative Elektrode 10 an dem einen Ende des Elektrodenstapels 20 gefaltet, die Teilfläche 25b wird über die negative Elektrode 10 an dem anderen Ende des Elektrodenstapels 20 gefaltet. Die Teilflächen 25c und 25d werden über die von den Kanten der Elektroden 10 und 11 gebildeten Seitenflächen des Elektrodenstapels 20 gefaltet. Schließlich werden die Teilflächen 25e über die von den unteren Kanten der Elektroden 10 und 11 gebildete Bodenfläche des Elektrodenstapels 20 gefaltet.

Für die Stapel-Umhüllung eignen sich die oben beschriebenen Glasfaser-Textilmaterialien. Es sind aber auch weitere isolierende Materialien geeignet, weil die Anforderungen geringer sind als bei den Glasfaser-Beuteln. Für die Stapel-Umhüllung können auch Polymerfolien aus z.B. PP (Polypropylen) oder PE (Polyethylen), insbesondere Folien aus fluorhaltigen Polymeren wie PTFE (Polytetrafluorethylen), ETFE (Ethylen-Tetrafluorethylen), FEP (Perfluorethylenpropylen), THV (Terpolymer aus Tetrafluorethylen, Hexafluorpropylen und Vinylidenfluorid) oder PFA (Perfluoralkoxy-Polymere) verwendet werden.

Die Abmessungen des Elektrodenstapels 20 und des Gehäuses 1 sind so aufeinander abgestimmt, dass der Elektrodenstapel 20 in das Gehäuse 1 eingeführt werden kann, wie dies in Fig. 1 dargestellt ist. Dabei sollte das Spiel zwischen der Begrenzung des (mit der Stapel-Umhüllung 25 versehenen) Elektrodenstapels 20 und den Innenwänden der Gehäuse möglichst klein sein, um die Energiedichte der Zelle zu maximieren und unerwünschte Bewegungen der Elektroden in dem Gehäuse zu vermeiden.

Das die Elektroden 10, 11 enthaltende Gehäuse 1 wird über den Füllanschluss 7 mit einem Elektrolyt 9 (Fig. 1) gefüllt. Vorzugsweise ist die Füllmenge so bemessen, dass die Oberfläche des Elektrolyts in einer Ebene unterhalb der oberen Begrenzung der Glasfaser-Beutel 13 verläuft. Generell sollte die Konstruktion derartig gestaltet sein, dass ein Ionentransport zwischen den negativen Elektroden 10 und den positiven Elektroden 12 nur durch das Glasfaser-Textilmaterial der Umhüllungen 13 hindurch möglich ist.

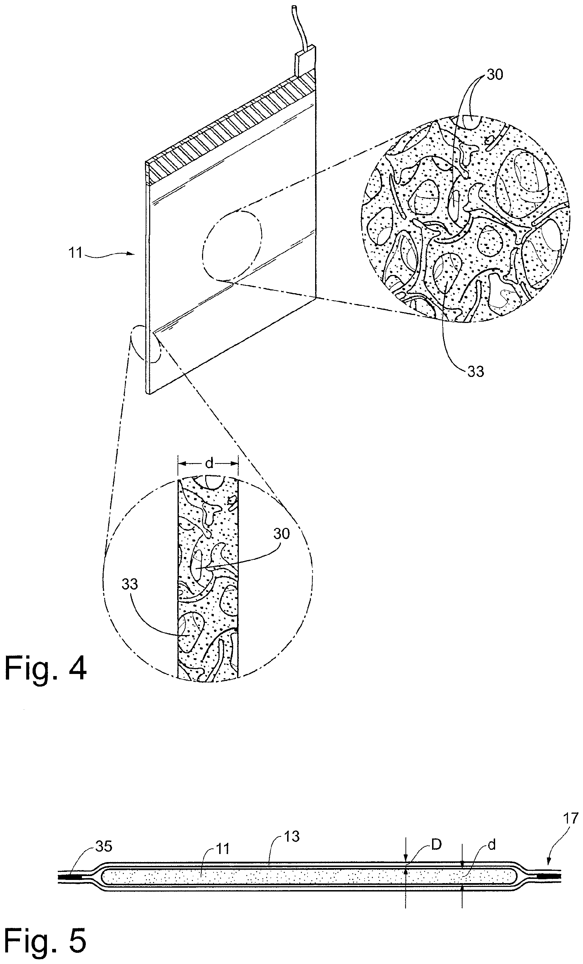

Figur 4 verdeutlicht durch zwei schematische Ausschnittsvergrößerungen die innere Struktur einer bevorzugten positiven Elektrode. Sie weist ein Ableitelement 32 mit einer dreidimensionalen porösen Metallstruktur auf. Bevorzugt wird das Ableitelement von einem Metallschaum gebildet, wobei es insbesondere vorteilhaft ist, wenn sich die poröse Metallstruktur im Wesentlichen über die gesamte Dicke d der positiven Elektrode erstreckt. Das aktive Material 33 der positiven Elektrode, beispielsweise Lithium-Eisen-Phosphat, befindet sich in den Poren der porösen Metallstruktur und ist vorzugsweise homogen darin verteilt. Nähere Einzelheiten sind der erwähnten WO 2011/098233 A2 zu entnehmen. Im Rahmen der Erfindung wurde festgestellt. dass besonders vorteilhafte Ergebnisse mit der Kombination der dort beschriebenen Elektrodentypen und einem Glasfaserbeutel, wie hier beschrieben, erreicht werden.

Die in der WO 2011/098233 A2 beschriebenen Elektroden sind ungewöhnlich dick. Aufgrund dieser Dicke und zusätzlich aufgrund der Scharfkantigkeit der für das Ableitelement verwendeten porösen Metallstruktur waren zusätzliche Probleme in Kombination mit einem Glasfaserbeutel zu erwarten. Zum einen haben textile Glasfasermaterialien eine geringe Elastizität in der Fläche, während dicke Elektroden zu einer relativ starken Materialverformung am Rand der Glasfaserbeutel führen. Außerdem ist das Risiko von Beschädigungen dünner Glasfasern durch scharfe Kanten besonders hoch.

In Figur 5 ist die Randverbindung 17 im Querschnitt zu erkennen. Sie ist vorzugsweise mittels eines thermoplastischen Polymers 35 hergestellt, das auf das Glasfaser-Textilmaterial der Umhüllung 13 aufgetragen und in einen schmelzflüssigen Zustand erhitzt wird, wobei die Schichten des Glasfaser-Textilmaterials am Rand zusammengedrückt und so abgekühlt werden, dass das thermoplastische Polymer erstarrt. Beispiele für thermoplastische Polymere sind PTFE (Polytetrafluorethylen), PCTFE (Polychlortrifluorethylen), THV (Terpolymer aus Tetrafluorethylen, Hexafluorpropylen und Vinylidenfluorid) oder PFA (Perfluoralkoxy-Polymere). In diesem Beispiel ist die Randkrümmung beider Seiten der Umhüllung gleich. Möglich sind auch Ausführungsformen, bei denen die Randkrümmungen unterschiedlich sind oder sogar, dass eine Seite plan liegt und nur die andere Seite eine Krümmung aufweist.

Hinsichtlich der Dickenverhältnisse des Glasfasermaterials der Umhüllung 13 (Dicke D) und der Elektrode 11 (Dicke d) ist Figur 5 nicht maßstäblich. Bevorzugte Werte der Dicken d und D wurden bereits angegeben.

Trotz der für den Fachmann zu erwartenden Probleme bei der Verarbeitung von Glasfaser-Textilmaterialien in einer anorganischen Elektrolytlösung konnte im Rahmen der Erfindung ein Verfahren zur Herstellung einer Batteriezelle entwickelt werden. Ein wesentlicher Aspekt der Entwicklung lag in der möglichst weitgehend automatisierten Herstellung der Umhüllung 13 der Elektroden, insbesondere der positiven Elektrode. Es wurde festgestellt, dass die Erzeugung der Randverbindung 17 der Umhüllung aus Glasfaser-Textilmaterial entscheidend ist und hierbei die größten Probleme zu überwinden sind.

Die Randverbindung wird erfindungsgemäß hergestellt, indem ein geeignetes Polymer auf das Glasfaser-Textilmaterial aufgetragen wird. Die Schichten 15, 16 des Glasfaser-Textilmaterials werden am Rand zusammengedrückt, so dass das Glasfaser-Material verklebt wird. Der Auftrag des Polymers erfolgt wenigstens auf den Rand einer der zu verbindenden Schichten 15, 16. Ein geeignetes Polymer ist THV.

Bevorzugt wird ein Randstreifen mit dem Polymer bedeckt, der nicht breiter als 5 % bezogen auf die entsprechende Dimensionen in Flächenrichtung (Breite) der Schicht des Glasfaser-Textilmaterials ist. Besonders bevorzugt ist der Rand nicht breiter als 3 %, sehr bevorzugt nicht breiter als 2 % der Dimension in Flächenrichtung der Schicht.

Ein bevorzugtes Verfahren zur Herstellung der Randverbindung verwendet ein thermoplastisches Polymer, das aufgetragen und in einen schmelzflüssigen Zustand erhitzt wird. Hierbei werden in einem anderen Schritt die beiden zu verbindenden Schichten des Glasfaser-Beutels am Rand zusammengedrückt, also in den Bereichen, die mit dem Polymer bedeckt sind. Die zusammengedrückten Schichten werden derart abgekühlt, dass das Polymer erstarrt. Auf diese Weise wird eine zuverlässige Verbindung der beiden Schichten erzeugt. Die Fäden aus beiden Schichten des Glasfaser-Textilmaterials werden so miteinander verbunden.

Einige Schritte des bevorzugten Herstellungsverfahrens können selbstverständlich auch in geänderter Reihenfolge ablaufen. Insbesondere können die Schritte, die das Auftragen des Polymermaterials und das Erhitzen in einen schmelzflüssigen Zustand umfassen, in geänderter Reihenfolge stattfinden. Beispielsweise ist es möglich, schmelzflüssiges thermoplastisches Polymer auf den Randbereich der Schichten des Glasfaser-Textilmaterials aufzutragen. Vorzugsweise erfolgt das Aufbringen des thermoplastischen Polymers durch Extrusion.

In einer ebenfalls bevorzugten Ausführungsform kann das thermoplastische Polymer auch in Form eines dünnen Streifens, beispielsweise einer streifenförmigen Folie, aufgebracht werden. In diesem Fall werden die beiden Schichten am Rand zusammengedrückt und gemeinsam mit der Polymerfolie erhitzt, bis das Polymer einen schmelzflüssigen Zustand erreicht.

In einer besonderen Ausführungsform wird das Erhitzen des Polymers in den schmelzflüssigen Zustand durch das gleichzeitige Einwirken einer weiteren Wärmequelle auf den Rand des Glasfaser-Textilmaterials unterstützt. Beispielsweise kann die Unterstützung durch Ultraschall oder infrarote Strahlung erfolgen. Bevorzugt erfolgt eine gleichzeitige Einwirkung von Ultraschall und eine Wärmeübertragung aus einem Maschinenteil, das den Rand wenigstens einer der Glasfaser-Schichten kontaktiert. Im Rahmen der Erfindung wurde erkannt, dass sich insbesondere der Einsatz einer beheizten Sonotrode eignet, um das Erhitzen in den schmelzflüssigen Zustand des Polymers zu unterstützen, was zu kürzeren Schmelzzeiten führt und somit den Verfahrensablauf beschleunigt. Hierdurch lassen sich die Stückzahlen bei der automatisierten Herstellung vergrößern.

Im Rahmen der Erfindung wurde eine weitere Möglichkeit der Randverbindung untersucht. In einer ebenfalls bevorzugten Verfahrensvariante wird ein geeignetes Polymer in einem Lösemittel gelöst. Die Lösung wird bevorzugt auf eine der Schichten des Glasfaser-Textilmaterials aufgetragen. Nach Auflegen der zweiten Schicht werden beide Schichten zusammengedrückt. Das Lösemittel verdampft, beispielsweise bei Raumtemperatur. Ein Erhitzen des Rands auf eine dem Lösemittel angepasste Temperatur beschleunigt das Verdampfen. Es verbleibt also lediglich das Polymer zur Verbindung der Ränder, das so für die Randverbindung sorgt. Beim Auftragen des gelösten Polymers ist ein vollständiges Durchdringen und ein Austritt des Polymers aus dem Glasfaser-Textilmaterial zu vermeiden. So kann eine zuverlässige, stabile und beständige Randverbindung erfolgen.

Im gesamten Verfahrensprozess zur Herstellung einer Batteriezelle werden zunächst die positiven Elektroden umhüllt. Bei der Herstellung der Umhüllung kann zunächst eine Schicht Glasfaser-Textilmaterial ausgebreitet werden, auf die die positive Elektrode 10 aufgelegt wird. Das Polymer wird auf die zu verbindenden Randbereiche der Schicht aufgetragen. Das Hinzufügen der zweiten Schicht und Zusammendrücken der beiden Schichten am Rand schließt sich an.

Alternativ können auch zunächst die beiden Schichten aufeinander gebracht und der Glasfaser-Beutel hergestellt werden. Die positive Elektrode kann dann in den auf wenigstens einer Seite offenen Glasfaser-Beutel eingeschoben werden.

Die umhüllten positiven Elektroden werden abwechselnd mit negativen Elektroden gestapelt. Dabei umfasst der Elektrodenstapel sowohl am Anfang wie auch am Ende je eine negative Elektrode. In einem weiteren Verfahrensschritt wird der Elektrodenstapel von einer Stapel-Umhüllung umhüllt. Der gesamte umhüllte Elektrodenstapel wird dann in das Batteriezellengehäuse eingeführt und in einem weiteren Schritt elektrisch angeschlossen. Nach Schließen des Gehäuses erfolgt ein Befüllen mit dem Elektrolyten durch den Füllanschluss, der danach verschlossen wird, so dass eine gasdicht abgeschlossene Batteriezelle entsteht.

## Patentansprüche

1. Wiederaufladbare elektrochemische Lithiumionen-Batteriezelle mit einem Gehäuse (1), einer positiven Elektrode (11), einer negativen Elektrode (10) und einem Elektrolyt (9), der SO₂ und ein Leitsalz des aktiven Metalls der Zelle enthält, wobei die positiven Elektroden (11) von einer Umhüllung (13) aus einem Glasfaser-Textilmaterial umhüllt sind,
die Flächenausdehnung der Umhüllung (13) aus Glasfaser-Textilmaterial größer als die Flächenausdehnung der positiven Elektrode (11) ist, so dass sich das Glasfaser-Textilmaterial über die Begrenzung (14) der positiven Elektrode hinaus erstreckt, und
zwei die positive Elektrode (11) beidseitig bedeckende Schichten (15, 16) des Glasfaser-Textilmaterials am Rand der positiven Elektrode (11) durch eine Randverbindung (17) miteinander verbunden sind,
sämtliche positive Elektroden (11) der Zelle jeweils von einer Umhüllung aus einem Glasfaser-Textilmaterial umhüllt und in einem Elektrodenstapel (20) alternierend mit negativen Elektroden in der Zelle angeordnet sind, **dadurch gekennzeichnet, dass** die Flächenmaße der Elektroden (10, 11) und der Umhüllung (13) so aufeinander abgestimmt sind, dass die Außenabmessungen der Umhüllung (13) der positiven Elektroden (11) und die Außenabmessungen der negativen Elektroden (10) mindestens in einer Dimension übereinstimmen.

2. Batteriezelle nach Anspruch 1, **dadurch gekennzeichnet, dass** die positive Elektrode (11) ein aktives Material der Zusammensetzung LiₓM'_{y}M"_{z}(XO₄)ₐF_{b} enthält, wobei
M' mindestens ein Metall, ausgewählt aus der Gruppe bestehend aus den Elementen Ti, V, Cr, Mn, Fe, Co, Ni, Cu und Zn ist,
M" mindestens ein Metall, ausgewählt aus der Gruppe bestehend aus den Metallen der Gruppen 2, 3, 4, 5, 6, 8, 9, 10, 11, 12, 13, 14, 15 und 16 des Periodensystems ist,
X ausgewählt aus der Gruppe bestehend aus den Elementen P, Si und S ist,
x größer 0 ist,
y größer 0 ist,
z größer oder gleich 0 ist,
a größer 0 ist und
b größer oder gleich 0 ist,
wobei vorzugsweise X das Element P ist, weiter bevorzugt M' das Metall Fe und besonders bevorzugt b gleich 0 ist.

3. Batteriezelle nach einem der vorhergehenden Ansprüche, **dadurch gekennzeichnet, dass** die Dicke (d) der positiven Elektrode (11) mindestens 0,25 mm, bevorzugt mindestens 0,3 mm, weiter bevorzugt mindestens 0,4 mm, weiter bevorzugt mindestens 0,5 mm, weiter bevorzugt mindestens 0,6 mm und besonders bevorzugt mindestens 1,0 mm beträgt.

4. Batteriezelle nach einem der vorhergehenden Ansprüche, **dadurch gekennzeichnet, dass** die Dicke (D) des Glasfaser-Textilmaterials der Umhüllung (13) höchstens 0,3 mm, bevorzugt höchstens 0,2 mm, besonders bevorzugt höchstens 0,15 mm beträgt.

5. Batteriezelle nach einem der vorhergehenden Ansprüche, **dadurch gekennzeichnet, dass** die Dicke (D) des Glasfaser-Textilmaterials der Umhüllung (13) mindestens 0,05 mm, bevorzugt mindestens 0,07 mm und besonders bevorzugt mindestens 0,09 mm beträgt.

6. Batteriezelle nach einem der vorhergehenden Ansprüche, **dadurch gekennzeichnet, dass** das Glasfaser-Textilmaterial ein Gewebe ist.

7. Batteriezelle nach einem der vorhergehenden Ansprüche, **dadurch gekennzeichnet, dass** die Fadendichte des Glasfaser-Gewebes der Umhüllung (13) in jeder Richtung des Gewebes mindestens 5 Fäden/cm, bevorzugt mindestens 10 Fäden/cm und besonders bevorzugt mindestens 20 Fäden/cm beträgt.

8. Batteriezelle nach einem der vorhergehenden Ansprüche, **dadurch gekennzeichnet, dass** die Elektrode (10, 11) ein Ableitelement (32) mit einer dreidimensionalen porösen Metallstruktur, insbesondere in Form eines Metallschaums, aufweist, wobei bevorzugt die poröse Metallstruktur sich im Wesentlichen über die gesamte Dicke (d) der Elektrode (10, 11) erstreckt und besonders bevorzugt das aktive Material in der porösen Metallstruktur im Wesentlichen homogen verteilt ist.

9. Batteriezelle nach einem der vorhergehenden Ansprüche, **dadurch gekennzeichnet, dass** die Anzahl der negativen Elektroden (10) um eins größer ist als die Anzahl der positiven Elektroden (11) mit einer Umhüllung aus einem Glasfaser-Textilmaterial.

10. Batteriezelle nach einem der vorhergehenden Ansprüche, **dadurch gekennzeichnet, dass** der aus den Elektroden beider Polaritäten gebildete Elektrodenstapel (20) von einer Stapel-Umhüllung (25) aus einem Glasfaser-Textilmaterial, vorzugsweise einem Glasfasergewebe, oder aus einer Polymerfolie umgeben ist, wobei das Gehäuse (1) der Batteriezelle aus einem elektrisch leitenden Material, insbesondere aus Metall besteht und die Stapel-Umhüllung eine elektrische Isolation gegenüber dem Gehäuse bildet.

11. Batteriezelle nach einem der vorhergehenden Ansprüche, **dadurch gekennzeichnet, dass** die Randverbindung (17) mittels eines thermoplastischen Polymers, bevorzugt mittels eines fluorhaltigen Polymers oder besonders bevorzugt mittels eines fluorhaltigen thermoplastischen Polymers, hergestellt ist.

12. Batteriezelle nach einem der vorgehenden Ansprüche, **dadurch gekennzeichnet, dass** der Elektrolyt (9) auf SO₂ basiert, wobei bevorzugt der Elektrolyt mindestens 3 Mol SO₂ je Mol Leitsalz, bevorzugt mindestens 4 Mol SO₂, weiter bevorzugt mindestens 4,5 Mol SO₂, weiter bevorzugt mindestens 5 Mol SO₂ und besonders bevorzugt mindestens 6 Mol SO₂ je Mol Leitsalz enthält.

## Claims

1. Rechargeable electrochemical lithium ion battery cell having a housing (1), a positive electrode (11), a negative electrode (10) and an electrolyte (9), which contains SO₂ and a conducting salt of the active metal of the cell,
wherein
the positive electrodes (11) are enveloped by a sheath (13) made of a glass fiber textile material,
the areal extent of the sheath (13) made of glass fiber textile material is greater than the areal extent of the positive electrode (11), so that the glass fiber textile material extends beyond the limit (14) of the positive electrode, and
two layers (15, 16) of the glass fiber textile material which cover the positive electrode (11) on both sides are connected to each other at the edge of the positive electrode (11) by means of an edge connection (17),
all positive electrodes (11) of the cell are each enveloped by a sheath made of a glass fiber textile material and are arranged in the cell alternately with negative electrodes in an electrode stack (20),
**characterized in that**
the areal dimensions of the electrodes (10, 11) and of the sheath (13) are matched to one another such that the external dimensions of the sheath (13) of the positive electrodes (11) and the external dimensions of the negative electrodes (10) correspond in at least one dimension.

2. Battery cell according to claim 1, **characterized in that** the positive electrode (11) contains an active material of the composition Liₓ M'_{y} M"_{z} (XO₄)ₐ F_{b}, wherein
M' is at least one metal selected from the group consisting of the elements Ti, V, Cr, Mn, Fe, Co, Ni, Cu, and Zn,
M" is at least one metal selected from the group consisting of the metals of the groups
2, 3, 4, 5, 6, 8, 9, 10, 11, 12, 13, 14, 15, and 16 of the periodic table,
X is selected from the group consisting of the elements P, Si, and S,
x is greater than 0,
y is greater than 0,
z is greater than or equal to 0,
a is greater than 0 and
b is greater than or equal to 0,
wherein X is preferably the element P, more preferably M' is the metal Fe, and particularly preferably b is equal to 0.

3. Battery cell according to any one of the preceding claims, **characterized in that** the thickness (d) of the positive electrode (11) is at least 0.25 mm, preferably at least 0.3 mm, more preferably at least 0.4 mm, more preferably at least 0.5 mm, more preferably at least 0.6 mm, and particularly preferably at least 1.0 mm.

4. Battery cell according to any one of the preceding claims, **characterized in that** the thickness (D) of the glass fiber textile material of the sheath (13) is a maximum of 0.3 mm, preferably a maximum of 0.2 mm, particularly preferably a maximum of 0.15 mm.

5. Battery cell according to any one of the preceding claims, **characterized in that** the thickness (D) of the glass fiber textile material of the sheath (13) is at least 0.05 mm, preferably at least 0.07 mm, and particularly preferably at least 0.09 mm.

6. Battery cell according to any one of the preceding claims, **characterized in that** the glass fiber textile material is a woven fabric.

7. Battery cell according to any one of the preceding claims, **characterized in that** the thread density of the glass fiber woven fabric of the sheath (13) in each direction of the fabric is at least 5 threads/cm, preferably at least 10 threads/cm and particularly preferably at least 20 threads/cm.

8. Battery cell according to any one of the preceding claims, **characterized in that** the electrode (10, 11) comprises a conducting element (32) with a three-dimensional porous metal structure, in particular in the form of a metal foam, wherein the porous metal structure preferably extends substantially over the entire thickness (d) of the electrode (10, 11) and particularly preferably the active material is essentially homogeneously distributed in the porous metal structure.

9. Battery cell according to any one of the preceding claims, **characterized in that** the number of negative electrodes (10) is greater by one than the number of positive electrodes (11) with a sheath made of glass fiber textile material.

10. Battery cell according to any one of the preceding claims, **characterized in that** the electrode stack (20) formed from the electrodes of both polarities is surrounded by a stack sheath (25) made of a glass fiber textile material, preferably a woven glass fiber fabric, or made of a polymer film, wherein the housing (1) of the battery cell is composed of an electrically conducting material, in particular metal, and the stack sheath forms an electrical insulation against the housing.

11. Battery cell according to any one of the preceding claims, **characterized in that** the edge connection (17) is produced by means of a thermoplastic polymer, preferably by means of a fluorine-containing polymer or particularly preferably by means of a fluorine-containing thermoplastic polymer.

12. Battery cell according to any one of the preceding claims, **characterized in that** the electrolyte (9) is based on SO₂, wherein the electrolyte preferably contains at least 3 mol SO₂ per mol of conducting salt, preferably at least 4 mol SO₂, more preferably at least 4.5 mol SO₂, more preferably at least 5 mol SO₂ and particularly preferably at least 6 mol SO₂ per mol of conducting salt.

## Revendications

1. Cellule de batterie lithium-ion électrochimique rechargeable avec un boîtier (1), une électrode positive (11), une électrode négative (10) et un électrolyte (9), qui contient du SO₂ et un sel conducteur du métal actif de la cellule, dans laquelle
les électrodes positives (11) sont enveloppées d'une enveloppe (13) constituée d'une matière textile de fibres de verre,
la superficie de l'enveloppe (13) constituée de matière textile de fibres de verre est supérieure à la superficie de l'électrode positive (11), si bien que la matière textile de fibres de verre s'étend au-delà de la limite (14) de l'électrode positive, et
deux couches (15, 16) de la matière textile de fibres de verre, recouvrant des deux côtés l'électrode positive (11), sont reliées l'une à l'autre au niveau du bord de l'électrode positive (11) par une liaison de bord (17), toutes les électrodes positives (11) de la cellule sont chacune enveloppées d'une enveloppe constituée d'une matière textile de fibres de verre et disposées dans un empilement d'électrodes (20) de manière alternée avec des électrodes négatives dans la cellule,
**caractérisée en ce que**
les mesures de superficie des électrodes (10, 11) et de l'enveloppe (13) sont adaptées les unes aux autres de telle sorte que les dimensions externes de l'enveloppe (13) des électrodes positives (11) et les dimensions externes des électrodes négatives (10) correspondent au moins selon une dimension.

2. Cellule de batterie selon la revendication 1, **caractérisée en ce que** l'électrode positive (11) contient une matière active de la composition LiₓM'_{y}M"_{z}(XO₄)ₐF_{b}, dans laquelle
M' est au moins un métal, choisi dans le groupe constitué des éléments Ti, V, Cr, Mn, Fe, Co, Ni, Cu et Zn,
M" est au moins un métal, choisi dans le groupe constitué des métaux des groupes 2, 3, 4, 5, 6, 8, 9, 10, 11, 12, 13, 14, 15 et 16 du système périodique,
X est choisi dans le groupe constitué des éléments P, Si et S,
x est supérieur à 0,
y est supérieur à 0,
z est supérieur ou égal à 0,
a est supérieur à 0 et
b est supérieur ou égal à 0,
dans laquelle de préférence X est l'élément P, plus préférablement M' est le métal Fe et de manière particulièrement préférée b est égal à 0.

3. Cellule de batterie selon l'une des revendications précédentes, **caractérisée en ce que** l'épaisseur (d) de l'électrode positive (11) atteint au moins 0,25 mm, de préférence au moins 0,3 mm, plus préférablement au moins 0,4 mm, plus préférablement au moins 0,5 mm, plus préférablement au moins 0,6 mm et de manière particulièrement préférée au moins 1,0 mm.

4. Cellule de batterie selon l'une des revendications précédentes, **caractérisée en ce que** l'épaisseur (D) de la matière textile de fibres de verre de l'enveloppe (13) atteint au plus 0,3 mm, de préférence au plus 0,2 mm, de manière particulièrement préférée au plus 0,15 mm.

5. Cellule de batterie selon l'une des revendications précédentes, **caractérisée en ce que** l'épaisseur (D) de la matière textile de fibres de verre de l'enveloppe (13) atteint au moins 0,05 mm, de préférence au moins 0,07 mm et de manière particulièrement préférée au moins 0,09 mm.

6. Cellule de batterie selon l'une des revendications précédentes, **caractérisée en ce que** la matière textile de fibres de verre est un tissu.

7. Cellule de batterie selon l'une des revendications précédentes, **caractérisée en ce que** la densité de fils du tissu de fibres de verre de l'enveloppe (13) dans chaque sens du tissu atteint au moins 5 fils/cm, de préférence au moins 10 fils/cm et de manière particulièrement préférée au moins 20 fils/cm.

8. Cellule de batterie selon l'une des revendications précédentes, **caractérisée en ce que** l'électrode (10, 11) comprend un élément de dérivation (32) possédant une structure métallique poreuse tridimensionnelle, en particulier sous la forme d'une mousse métallique, dans laquelle de préférence la structure métallique poreuse s'étend sensiblement sur toute l'épaisseur (d) de l'électrode (10, 11) et de manière particulièrement préférée la matière active est répartie dans la structure métallique poreuse de manière sensiblement homogène.

9. Cellule de batterie selon l'une des revendications précédentes, **caractérisée en ce que** le nombre des électrodes négatives (10) est supérieur de un au nombre des électrodes positives (11) avec une enveloppe constituée de matière textile de fibres de verre.

10. Cellule de batterie selon l'une des revendications précédentes, **caractérisée en ce que** l'empilement d'électrodes (20) formé à partir des électrodes des deux polarités est entouré d'une enveloppe d'empilement (25) constituée d'une matière textile de fibres de verre, de préférence d'un tissu de fibres de verre, ou d'une feuille de polymère, dans laquelle le boîtier (1) de la cellule de batterie est constitué d'une matière électriquement conductrice, en particulier de métal, et l'enveloppe d'empilement forme une isolation électrique par rapport au boîtier.

11. Cellule de batterie selon l'une des revendications précédentes, **caractérisée en ce que** la liaison de bord (17) est produite au moyen d'un polymère thermoplastique, de préférence au moyen d'un polymère fluoré ou de manière particulièrement préférée au moyen d'un polymère thermoplastique fluoré.

12. Cellule de batterie selon l'une des revendications précédentes, **caractérisée en ce que** l'électrolyte (9) est à base de SO₂, dans laquelle de préférence l'électrolyte contient au moins 3 moles de SO₂ par mole de sel conducteur, de préférence au moins 4 moles de SO₂, plus préférablement au moins 4,5 moles de SO₂, plus préférablement au moins 5 moles de SO₂ et de manière particulièrement préférée au moins 6 moles de SO₂ par mole de sel conducteur.
